# EUROPEAN PATENT SPECIFICATION

(11) **EP 1 946 157 B1**
(45) Date of publication and mention of the grant of the patent: **14.11.2012**
(21) Application number: 06847719.9
(22) Date of filing: 18.12.2006
(51) Int. Cl.: G02B 5/128, B60R 13/10

(54) **SEMI-TRANSPARENT RETROREFLECTIVE SHEET AND USE THEREOF TO MAKE A BACKLIT LICENSE PLATE**
SEMITRANSPARENTE RÜCKSTRAHLENDE FOLIE UND DEREN VERWENDUNG ZUR HERSTELLUNG EINES RÜCKBELEUCHTETEN NUMMERNSCHILDS
FEUILLE SEMI-TRANSPARENTE RETROREFLECHISSANTE ET UTILISATION DE CELLE-CI POUR PRODUIRE UNE PLAQUE D'IMMATRICULATION RETROECLAIREE

(30) Priority: 21.12.2005 GB 0525893
(43) Date of publication of application: 23.07.2008
(73) Proprietor: 3M Innovative Properties Company, St. Paul, MN 55133-3427 (US)
(72) Inventor: FRISCH, Ruediger T., D-41453 Neuss (DE); JOST, Michael, D-41453 Neuss (DE)
(74) Representative: Hohmann, Arno
(86) International application number: PCT/US2006/048147
(87) International publication number: WO 2007/075518

(56) References cited:
- WO-A-95/31739
- DE-A1-102004 025 325
- GB-A- 2 255 312
- US-A- 4 511 210
- US-A- 5 064 272
- US-A- 5 069 964
- US-A- 5 959 775
- US-B2- 6 652 954

## Description

The present invention relates to a semi-transparent retroreflective material, in particular the present invention relates to a semi-transparent retroreflective material suitable for making a license plate that can be illuminated from the back. The invention further relates to a license plate that can be illuminated from the back. The invention further relates to a license plate assembly comprising a license plate and a light source and to a motor vehicle or trailer comprising a license plate assembly. Still further, the invention relates to a method for making a license plate that can be illuminated from the back.

Commonly employed license plates for motor vehicles for use on roads such as cars, busses and trucks and for trailers, typically are illuminated from their front face when it is dark. In particular, the license plates typically have indicia representing the license plate number issued by the appropriate national authorities on a retroreflective background. This retroreflectivity enhances visibility of the plate during day time conditions and also during night time conditions when lights of other motor vehicles or street light impinges upon the front face of the license plate. But in order to meet regulatory requirements, the license plate also needs to be illuminated with lights arranged on the motor vehicles. Thus, typically, lights are arranged aside of the license plate so as to illuminate the front face of the license plate.

Such an arrangement has the disadvantage of limiting the design possibilities of car manufacturers. In particular, the lights that need to be arranged along one or more sides of the license plate prevent the car manufacturer of making more appealing designs as the lights often appear as a disturbing element in the design. Furthermore, such front-lit license plates may suffer from a non-uniform illumination of the license plate. Typically also more powerful light sources may be required to light a license plate from the front, thus resulting in more power consumption.

To overcome this problem, DE 297 12 954 discloses a license plate arrangement that is illuminated from the back. In particular, this German utility model discloses a stiff transparent plastic plate on which the license plate number is depicted as opaque indicia. The stiff plastic plate is held in front of an electroluminescent foil through a holding frame. The electroluminescent foil when activated illuminates the plastic plate from the back. Such an arrangement has the disadvantage that no retroreflectivity is provided which is a requirement of the regulatory authorities of many countries. A further back-lit license plate is disclosed in US 5,692,327.

EP 1 262 373 describes a back-lit electroluminescent license plate arrangement that also provides retroreflectivity. In particular, this EP application discloses a housing in which there is arranged in the order given (from back to front) an electroluminescent foil, a transparent retroreflective sheet, a roughening layer such as a highly transparent film with a rough surface and a further transparent cover which closes the front opening of the housing such that all layers of the arrangement are held tightly together. It is taught that the roughening layer overcomes formation of Newton-rings which would otherwise form between the transparent front cover and the retroreflective sheet. The indicia of the license plate can be provided directly on the transparent cover or on a transparent film between the transparent retroreflective sheet and the transparent cover. The manufacturing of this license plate may be somewhat complicated and expensive.

WO 04/048155 discloses a further back-lit electroluminescent license plate that comprises a transparent retroreflective sheet, in particular a transparent retroreflective sheet comprising cube-comer elements. In order to adapt the retroreflectivity of the license plate to local regulatory requirements, it is taught to destroy parts of the retroreflective layer of the sheet. In one embodiment, it is taught to cut or punch holes in the retroreflective sheet thereby creating areas where the retroreflectivity is destroyed. However, such method may lead to the retroreflective sheet becoming prone to penetration of water or dirt in the layers of the retroreflective sheet. Hence it will generally be required to protect the retroreflective sheet with a protective sheet of for example plastic or to enclose the license plate in a sealed housing which will add to the costs of the license plate. Furthermore, the appearance of the license plate may suffer as well.

It would now be desirable to provide a further way of obtaining a backlit license plate. In particular, it would be desirable to provide a backlit license plate that can be easily and cost effectively manufactured. It would further be desired that the license plate has good weathering properties, in particular the license plate maintains good properties of retroreflectivity and illumination under a variety of weather conditions including temperature variations and humidity. It would further be desired to provide a backlit license plate that can be designed for minimum power consumption. Also, it would be desired that the license plate can be designed to comply with a variety of local law regulations pertaining for example to evenness of illumination, retroreflectivity and color of the license plate background as well as indicia.

In accordance with one aspect of the present invention, there is provided a semi-transparent retroreflective material having a retroreflective side and an opposite rear side, the retroreflective material having a regular or irregular two-dimensional pattern of transparent and opaque areas, said retroreflective material comprising a layer of transparent microspheres and a reflective layer located functionally behind said layer of transparent microspheres, said reflective layer comprising a regular or irregular two-dimensional pattern of metal areas of contiguous metal and open areas having substantially no metal, wherein open areas of said reflective layer correspond to transparent areas of said retroreflective material and metal areas of said reflective layer correspond to opaque areas of said retroreflective material and wherein said transparent microspheres are present in said transparent and opaque areas and wherein said transparent areas comprise at least 5% of the total surface of said retroreflective material on said retroreflective side.

The semi-transparent retroreflective material is especially suitable for providing a license plate that can be illuminated from the back. Accordingly, in a further aspect, there is provided a license plate having a display side and opposite back side, the display side displaying indicia defining a license plate number, said license plate being adapted to be illuminated from the back side, wherein said license plate comprises a semi-transparent retroreflective material as described above and wherein the semi-transparent retroreflective material is arranged in such a way so as to render the display side of said license plate retroreflective.

A license plate that can be made with the semi-transparent retroreflective sheet may offer such advantages as having a generally even illumination and retroreflectivity requirements that can easily meet local law requirements. Additionally, the license plate may offer the advantage that the background of the license plate, notwithstanding the presence of the metal in the metal areas of the reflective layer, is neutral such that a color (generally white) in accordance with the regulatory requirements can be achieved. Furthermore, the license plate generally offers the advantage that the power consumption for illumination of the license plate can be minimized. The invention may further offer the advantage that the license plate can be designed or made according to a wide range of requirements of illumination and retroreflectivity. Additionally, the license plate will generally have a uniform appearance to a viewer, even at a distance relatively close to the license plate. The license plate can generally also be easily and cost effectively be produced, generally in existing license plate manufacturing equipment.

In a further aspect, the invention provides a method for making the license plate, said method comprising (i) providing a semi-transparent retroreflective material as described above, (ii) cutting said semi-transparent retroreflective material to required dimensions and applying indicia defining a license plate number.

In yet another aspect, there is provided a license plate assembly comprising a light source and a license plate as described above arranged on the light source such that said license plate can be illuminated by the light source from the back side of the license plate.

In this invention, the following terms used are intended to have the meaning as set forth hereafter unless otherwise indicated:

The term 'transparent' means transparency for visible light and includes both clear transparency as well as translucency. Generally, a material is considered transparent if at least 50%, generally at least 60 % or at least 80% of visible light illuminating the material can pass through the material.

The term 'opaque' in connection with the invention is intended to mean that visible light is substantially absorbed or reflected, i.e. at least 90% of the light is absorbed or reflected, typically at least 95% of the visible light is absorbed or reflected.

The term 'retroreflective' is used to indicate that the relevant article reflects light in substantially the same direction from which it originated.

In connection with the description of this invention, reference will be made to the following drawings without the intention to limit the invention thereto. Also the drawings are purely schematic drawings in which the various dimensions of the features shown may have been exaggerated and the relative proportion of the dimensions of the various features shown in the drawings will generally not correspond to their proportion in the actual embodiment illustrated by the schematic drawing.
Figure 1 is a planar view illustrating a two-dimensional pattern of metal areas and open areas in the reflective layer of a semi-transparent retroreflective material in connection with the invention.
Figure 2 is a cross-sectional view of a semi-transparent retroreflective material according to an embodiment of the invention.
Figure 3 is a planar view of a license plate.
Figure 4 is a cross-sectional view along line A in figure 3 and illustrating an embodiment of a license plate in connection with the invention.
Figure 5 illustrates an embodiment of a license plate assembly according to the invention.

### Semi-transparent retroreflective material

The semi-transparent retroreflective material in accordance with the present invention comprises a layer of transparent microspheres behind which is functionally arranged a reflective layer. The transparent microspheres are usually generally spherical microspheres in order to provide the most uniform and efficient retroreflection. The microspheres preferably also are substantially transparent so as to minimize absorption of light so that a large percentage of the incident light is retroreflected. The microspheres often are substantially colorless but may be tinted or colored in some other fashion. The microspheres may be made from glass, a non-vitreous ceramic composition, or a synthetic resin. In general, glass microspheres are preferred because they tend to be less expensive, harder, and more durable than microspheres made from synthetic resins. Examples of microspheres that may be useful in this invention are disclosed in the following united States patents: 5 1,175,224,2,461,011, 2,726,161, 2,842,446, 2,853,393, 2,870,030, 2,939,797, 2,965,921,2,992,122, 3,468,681, 3,946,130, 4,192,576, 4,367,919, 4,564,556, 4,758,469, 4,772,511, and 4,93 1,414. The transparent microspheres typically have an average diameter in the range of about 30 to 200 micrometers. The microspheres used typically have a refractive index of about 1.7 to about 3.0.

The microspheres are held in a binder matrix, which may be clear or colored. The binder matrix typically contains a flexible polymeric material and may also contain such optional additives such as stabilizers (for example, thermal and hydrolytic stabilizers), antioxidants, flame retardants, and flow modifiers (for example, surfactants), viscosity adjusters (for example, organic solvents), rheology modifiers (for example, thickeners), and coalescing agents, plasticizers, tackifiers, and the like. Generally, the binder matrix contains from about 50 weight percent up to about 99 weight percent of a polymeric material with the remainder being optional additives in effective amounts. The polymeric material of the binder matrix may be a polymer including but not limited to an elastomer. For the purposes of the invention, an elastomer is defined as a polymer having an ability to be stretched to at least twice its original length and to retract to approximately its original length when released, (definition taken from "Hawley's Condensed Chemical Dictionary", R.J. Lewis Sr. Ed., 12th Ed., Van Nostrand Reinhold Co., New York, NY (1993)). Illustrative examples of the polymers that may be employed in the binder matrix include: polyolefins; polyesters; polyvinyl acetals; polyurethanes; polyepoxides; polyvinyl chloride; natural and synthetic rubbers; and combinations thereof.

Specific examples of useful binder matrix materials are disclosed in United States Patents 5,200,262 and 5,283,101. In the '262 patent, the binder matrix comprises one or more flexible polymers having active hydrogen functionalities such as crosslinked urethane-based polymers (for example, isocyanate cured polyesters or one of two component polyurethanes) and one or more isocyanate-functional silane coupling agents. In the '101 patent, the binder matrix comprises an electron-beam cured polymer selected from the group consisting of chlorosulfonated polyethylenes, ethylene copolymers comprising at least about 70 weight percent polyethylene, and poly(ethylene-co-propylene-co diene) polymers.

Examples of commercially-available polymers that may be used in the binder matrix include the following: Vitel™ VPE 5545 and VPE 5833 polyesters available from Goodyear Tire and Rubber Company, Akron, Ohio; Rhoplex™ HA-8 and NW-1845 acrylic resins available from Rohm and Haas, Philadelphia, Pennsylvania; Cydrothane™ a polyurethane available from Cytec Industries of American Cyanamide, West Patterson, New Jersey; Estane™ 5703 and 5715 available from B.F. Goodrich, Cleveland, Ohio; and Nipola 3000, available from Zeon Chemicals, Inc., Rolling Meadows, Illinois.

The microspheres may be partially embedded in the binder matrix material such that they protrude from the binder matrix and are partially exposed to air. Alternatively, and generally preferred in this invention, the microspheres are fully contained or embedded in the binder matrix. Generally, the binder matrix may comprise of more than one layer which may contain different polymeric materials and/or have a different chemical composition. The thickness of the binder matrix is generally between 40 and 250 micrometer, with a typical range being between 50 and 200 micrometer.

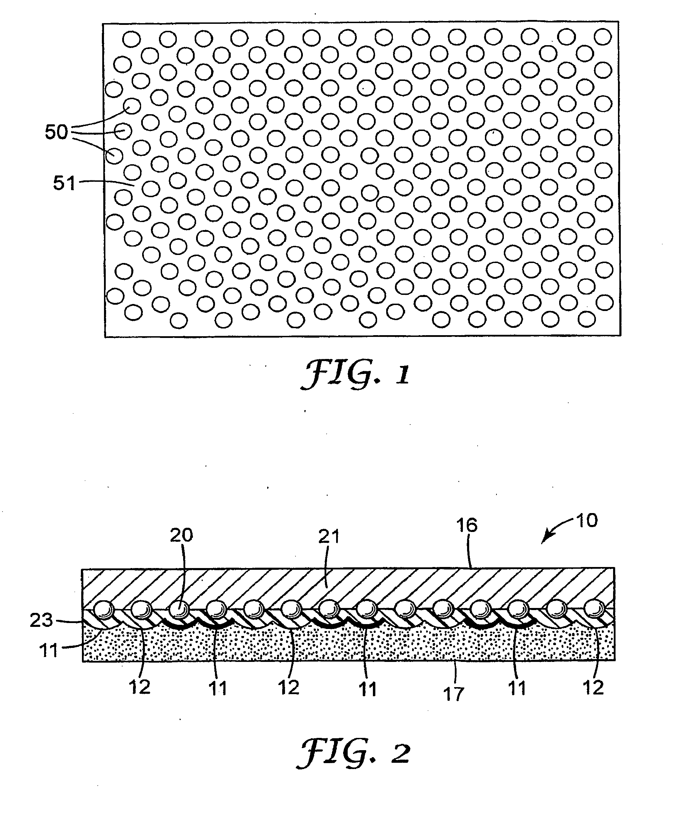

Arranged functionally behind the layer of microspheres is a reflective layer. By 'functionally behind' is meant that the reflective layer is provided behind the microspheres in such a way that the metal areas of the reflective layer in conjunction with the microspheres retroreflect light. Typically, this means that the metal areas of the reflective layer are directly provided on the microspheres or are slightly spaced away, through a space coat, from the microspheres to adjust to the focal point of the microspheres. In connection with the present invention, the reflective layer is provided as a two-dimensional pattern of metal areas and open areas. By two-dimensional is meant that the metal areas and open areas interchange with each other along the width and length of the retro-reflective material. The pattern may be regular as well as irregular. In one embodiment, illustrated in figure 1 the pattern of metal and open areas may be provided as individual discrete metal areas 50 between which are defined the open areas, i.e. the open areas are connected with each other and define a continues open area 51 between the individual metal areas. Alternatively, the inverted pattern may be provided where discrete open areas between which are defined metal areas that are connected with each other so as to define a continues metal area between the open areas. In a further embodiment, the pattern may be comprised of several individual metal areas and several individual open areas that may not be connected so as to define a continues area of open areas or metal areas. An example of such a pattern may be a checker board.

The shape and size of individual open areas and/or metal areas is not particularly critical and may vary over a wide range. For example the metal and/or open areas may be rectangular, square, circular or elliptical in shape or they may have an irregular shape or polygonal shape. Individual discrete open areas or individual discrete metal areas may have a size of between 0.01 mm² and 20 mm², typically from about 0.05 mm² to 15 mm² such as for example between 1 mm² and 7 mm². In a particular embodiment in connection with the present invention, part of the open and/or metal areas are of a similar shape and/or size. So for example, in accordance with a particular embodiment the individual open areas may substantially all be of the same size and/or shape. In another embodiment, the metal areas are of the same size and shape. In yet a further embodiment individual open areas and metal areas are of the same shape, e.g. rectangular.

The metal areas contain a contiguous metal, i.e. the metal areas are typically comprised of vapour deposited metal. A variety of metals may be used to provide the metal areas of the reflective layer. These include aluminum, silver, chromium, nickel, magnesium, gold, and alloys thereof, in elemental form. Aluminum and silver are the preferred metals for use in the reflective layer. The metal areas should typically be thick enough to render the retroreflective material opaque in areas where the reflective layer contains metal areas. Generally, the thickness of the metal areas is at least 0.1 µm, for example at least 0.2 µm.

The open areas of the reflective layer generally do not contain metal or only a slight amount, typically such that the open areas provide transparent areas in the reflective layer. The open areas of the reflective layer are typically filled with polymeric material of the binder matrix or with material of another layer contained in the retroreflective material.

In one embodiment in connection with the invention, the semi-transparent retroreflective material may contain one or more layers defining a dielectric mirror. Such layers may be provided between the microsphere layer and the reflective layer or they may be provided on the reflective layer. The dielectric mirror may be similar to known dielectric mirrors disclosed in U.S. Pat. Nos. 3,700,305 and 4,763,985. In using dielectric mirrors with microspheres, the microspheres typically have a refractive index n₂ and have a layer of transparent material disposed thereon which has a refractive index n₁. The opposite face of the transparent material having refractive index n₁, is in contact with a material having a refractive index n₃. Both n₂ and n₃ have a refractive index of at least 0.1, preferably at least 0.3, higher or lower than n₁. The transparent material is a layer typically having an optical thickness corresponding to odd numbered multiples (that is, 1, 3, 5, 7 ...) of about one-quarter wavelength of light in the wavelength range of about 380 to about 1,000 nanometers. Thus, either n₂ >n₁ <n₃ or n₂ <n₁ >n₃, and the materials on either side of the transparent layer may be either both higher or both lower in refractive index than n₁. When n₁, is higher than both n₂ and n₃, n₁ is preferably in the 1.7 to 4.9 range, and n₂ and n₃ are preferably in the 1.2 to 2.5 range. Conversely, when n₁ is lower than both n₂ and n₃, n₁ is preferably in the 1.2 to 1.7 range, and n₂ and n₃ are preferably in the 1.7 to 4.9 range. The dielectric mirror preferably comprises a contiguous array of materials, at least one being in layer form, having an alternating sequence of refractive indices. In an embodiment the contiguous array has from one to seven layers, for example two, three, four or five layers. Desirably all are light transparent materials and are clear or essentially colorless to minimize light absorption and maximize light transmission.

Among the many compounds that may be used in providing transparent materials within the desired refractive index range are: high index materials such as CdS, CeO₂, CsI, GaAs, Ge, InAs, InP, InSb, ZrO₂, Bi₂ O₃, ZnSe, ZnS, WO₃, PbS, PbSe, PbTe, RbI, Si, Ta₂O₅, Te, TiO₂ ; low index materials such as SiO₂, Al₂O₃, AlF₃, CaF₂, CeF₃, LiF, MgF₂, NaCl, Na₃AlF₆, ThOF₂, elastomeric copolymers of perfluoropropylene and vinylidene fluoride et cetera. Other materials are reported in Thin Film Phenomena, K. L. Chopra, page 750, McGraw-Hill Book Company, New York, (1969). Preferred succeeding layers contain cryolite (Na₃ AlF₆) and zinc sulfide. Dielectric mirrors or similar multi-layer reflective coatings can also be used in combination with cube corner sheeting as disclosed in e.g. JP 06-347622, US 6,172,810, US 6,224,219, US 6,243,201 and US 6,350,034.

The use of transparent dielectric mirrors in connection with the semi-transparent retroreflective sheet may offer the advantage of also providing a substantial amount of retroreflectivity in the open areas of the reflective layer. This provides for additional flexibility in matching regulatory requirements in respect of illumination and retroreflectivity. Additionally, the power consumption needed to illuminate the license plate can be optimized while still achieving the required amount of retroreflectivity.

The metal areas of the reflective layer of the semi-transparent retroreflective material are typically obtained by vapour depositing the metal. In order to achieve a desired pattern of open and metal areas in the reflective layer, several techniques can be used. In accordance with one embodiment, a mask may be provided on the layer of microspheres (or on a space coat or other layers that are desired as intermediate layers between the microspheres and the reflective layer) and the metal may then be vapour deposited through the mask. Vapour deposition through a mask is for example disclosed in EP 759179. In a particular embodiment, the mask may comprise of a regular two-dimensional pattern such as for example a plastic sheet punched with holes, e.g. holes of circular shape. Use of such a mask will result in metal areas on the microsphere layer corresponding to the shape and size of the holes. In another embodiment, a non-woven web may be used as a mask which can result in an irregular pattern of vapour deposited metal areas and corresponding areas that don't have metal deposited. Generally it will be preferred to temporarily adhere the mask to the microsphere layer or space coat or intermediate layers provided thereon. This will generally provide more sharp and defined edges of the metal and open areas. The mask may be adhered by a pressure sensitive adhesive that allows the mask to be cleanly removed after the metal vapour deposition step.

Alternatively, the metal may be vapour deposited over the whole surface of the microspheres and than selectively etched away as disclosed in for example U.S. Patents 5,264,063, 4,801,193, and U.S. Patent Application Serial No. 0811 8 1,619 filed January 13, 1994.

The semi-transparent retroreflective material comprises a two-dimensional regular or irregular pattern of transparent and opaque areas. Generally this is achieved by providing the layers constituting the semi-transparent retroreflective material as transparent (clear or translucent) layers. The pattern of the reflective layer then causes a two-dimensional pattern of transparent and opaque areas as a result of the metal areas of the reflective layer which are provided as opaque areas. Although convenient, it is not required that the pattern of transparent and opaque areas corresponds one to one to the pattern of metal and open areas in the reflective layer. For example, a further patterned layer may be provided, for example behind the reflective layer, whereby said patterned layer renders the semi-transparent retroreflective material opaque at some of the open areas of the reflective material.

The total surface of transparent areas relative to the total amount of surface of the semi-transparent retroreflective material at its retroreflective side should be at least 5%, for example at least 10% and conveniently at least 15 or 20%. Depending on the regulatory requirements, the transparent areas may occupy up to 70% of the total amount of the surface of the semi-transparent retroreflective material. A typical range may be from 15 to 70%. In another embodiment, the range may be from 20 to 60% or from 25 to 55%.

In figure 2, there is illustrated a cross-sectional schematic view of an embodiment of a semi-transparent retroreflective sheet in accordance with the invention. The retroreflective sheet 10 comprises a layer of microspheres 20 embedded in a binder matrix that comprises a top layer 21 defining the surface on the retroreflective side 16, a space coat between the reflective layer 23 and the microsphere layer, and a bottom layer defining the rear side 17. The reflective layer includes metal areas 11 between which are open areas 12 that contain no metal or that are substantially metal free. Since the binder matrix of the retroreflective sheet 10 is provided as a transparent binder matrix, the retroreflective sheet will be transparent in the areas corresponding to open areas 12 of the reflective layer.

### License plate

The semi-transparent retroreflective sheet is conveniently used to make a license plate. In order to provide a license plate of sufficient strength and rigidity, the semi-transparent retroreflective sheet is typically laminated with a transparent polymeric support sheet for example by using a transparent adhesive. The transparent polymeric support sheet will typically be a stiff polymeric support sheet. That is, although the transparent polymeric support sheet may be bent somewhat, it has a sufficient stiffness such that it cannot be folded or wrinkled as may be possible with a film or foil. Thus, the support sheet will typically have a thickness to provide such desired stiffness. Typically, the transparent support sheet will have a thickness between 0.2 and 5 mm, preferably between 0.3 and 3 mm and most preferably between 0.5 mm and 1.5 mm. The transparent polymeric support sheet may be comprised of a single polymer layer or may be comprised of several polymer layers of same or different composition.

A layer of the polymeric support sheet may be a thermoplastic polymer layer or may be a cross-linked polymer layer. Also, a combination of thermoplastic polymer layers and cross-linked polymer layers may be used.

Polymeric materials that may be used in the transparent polymeric support sheet include thermoplastic polymers such as polycarbonates, poly(meth)acrylates such as polymethyl methacrylate, polyolefins such as polyethylene and polypropylene, polyesters such as polyethyleneterephthalates and polyethylenenaphthalates, cellulose acetate, polyvinyl chloride and copolymers of acrylonitrile, styrene and butadiene. The transparent polymeric support may further include one or more layers of cross-linked material.

In a particular embodiment, the transparent polymeric support sheet is cold-formable. By 'cold-formable' in connection with the invention is meant that raised indicia can be formed in the transparent polymeric support sheet at ambient temperature (20 to 35°C) for example through embossing or deep drawing and that such raised indicia are maintained at elevated temperatures to which the license plate may be exposed, e.g. when the motor vehicle is parked in the sun. This typically requires that the polymeric support has a sufficient heat stability, i.e. the polymeric support sheet should typically be heat stable up to temperatures of 60°C to 85°C. Without sufficient heat stability, the number of the license plate may fade over time or become distorted. This will be particularly the case when the indicia are cold-formed through embossing because of stress forces created in the polymeric support sheet during the embossing. Examples of transparent polymeric support sheets that are cold-formable include polymeric support sheets comprising polycarbonate. Also, a polymeric support sheet that is cold-formable may be obtained from a multi-layer construction including one or more thermoplastic polymers enumerated above and one or more layers of a cross-linkable material. Upon cold-forming the indicia in the polymeric support sheet, the cross-linkable material may be cross-linked to a polymeric cross-linked material. Thus, the one or more layers of polymeric cross-linked material will provide the desired heat stability because the cross-linked material will prevent the thermoplastic layers of the multi-layer sheet from flowing, which would cause the cold-formed indicia to disappear. Still further, a cold-formable polymeric support sheet may comprise one or more layers that comprise a cross-linkable thermoplastic polymer composition. In the non cross-linked state, the polymeric support sheet can be readily cold-formed to provide indicia therein. Subsequent to forming the indicia, the cross-linkable thermoplastic polymer composition can be cross-linked such that the layer(s) loses its thermoplastic properties and sufficient heat stability may thereby be provided.

The cross-linkable material that can be used includes materials that may be heat cross-linked, cross-linked by light including visible light and UV light, cross-linked by electron beams or by gamma irradiation. The cross-linkable material may be a composition that is based on cross-linkable monomeric or low molecular weight components, cross-linkable polymer components as well as combinations thereof. Suitable cross-linkable materials that can be used include for example an electron beam curable vinyl chloride-acrylate copolymer as disclosed in US 4,889,895, a radiation curable polyvinyl chloride as disclosed in US 4,631,229, an epoxy based curable composition as described below for use in the adhesive layer.

The transparent polymeric support sheet may be laminated to the rear side of the semi-transparent retroreflective material or may be laminated on the reflective side.

If one or more adhesive layers are used to laminate or bond the transparent polymeric support sheet to the reteroreflective material, the adhesive layer(s) should be transparent. Preferably the adhesive layer(s) will be at least 80%, preferably at least 90% transmissive for visible light. The adhesive layers preferably show good weatherability properties, have good thermal stability and are moisture resistant. The adhesive layer should furthermore create a high bond strength such that the license plate cannot be delaminated. A sufficient bond strength typically means that the peel force necessary to delaminate the polymeric support sheet and retroreflective material from each other is at least 2 N/cm, preferably at least 4 N/cm. The adhesive layer may comprise a pressure sensitive adhesive, a heat-activatable adhesive, i.e. an adhesive that requires heat activation to develop a bond or a cross-linkable adhesive. Examples of adhesives include pressure sensitive adhesives (PSA) based on acrylic polymers, based on silicones or based on polyolefins as disclosed in Handbook of Pressure Sensitive Adhesive Technology (third edition) D.Satas, Ed. Satas and Associates, Warwick RI/USA, 1989 on pages 444-514, 550-556 and 423-442 respectively. Adhesives that may be used to bond to substrates having a low surface energy such as polyolefin or polycarbonate, include for example pressure sensitive adhesives based on an acrylic copolymer of one or more alkyl esters of acrylic or methacrylic acid and a vinyl ester as disclosed in for example EP 1 318 181 or a pressure sensitive adhesive as disclosed in EP 1 245 656 which discloses a pressure sensitive adhesive composition that contains (i) the reaction product obtainable from a precusor composition comprising one or more alkyl esters of acrylic or methacrylic acid, one or more copolymerizable monomers that have a Lewis base functionality and optionally one or more cross-linkers and (ii) one or more tackifying resins. Still further pressure sensitive adhesives that can be used to create a strong bond in particular to a polycarbonate substrate include those disclosed in US 4,181,752, US 4,418,120 and WO 95/13331. These references teach PSA that are based on acrylic polymers that are cross-linked without however loosing their pressure sensitive adhesive properties. Further adhesive layer compositions that may be used include those that are based on a curable composition that upon curing creates a strong adhesive bond between the sheets. Suitable curable compositions that may be used include radiation curable epoxy compositions. Such compositions may be applied in their uncured (or partially cured) state between the sheets. Upon curing of the laminate through radiation, e.g. UV radiation or electron beam radiation, a firm and durable bond can be created. Examples of epoxy based curable compositions can be found in e.g. EP 1026218 and EP 620 259 disclosing a UV or electron beam curable epoxy composition comprising an epoxy resin, a polyester and optionally a photoinitiator. Still further epoxy-based adhesive compositions are disclosed in US 4,622,349, US 4,812,488, US 4,920,182, US 4,256,828 and EP 276716. Further, according to a particular embodiment of the invention, an epoxy based pressure sensitive thermosetting adhesive can be used as disclosed in US 5,086,088. This US patent discloses a pressure-sensitive thermosetting adhesive comprising from about 30% to about 80% by weight of a photopolymerizable prepolymeric or monomeric syrup containing an acrylic ester and a polar copolymerizable monomer, from about 20% to about 60% by weight of an epoxy resin or a mixture of epoxy resins containing no photopolymerizable groups, from about 0.5% to about 10% by weight of a heat-activatable hardener for the epoxy resin, from about 0.01% to about 5% of a photoinitiator, and from 0% to about 5% of a photocrosslinking agent.

The license plate typically will have shape and dimensions conforming to relevant regulatory requirements. Also, the license plate will comprise indicia that represent the number of the license plate as may be issued by a relevant authority. In addition to indicia representing the number of the license plate, the license plate may comprise further indicia such as for example indicia showing the country letter or indicia giving indications of the manufacturer of the license plate and/or date of issuance of the license plate. Some of these latter indicia may be in machine readable form such as for example in the form of a bar code. The indicia of the license plate can be formed by any technique used in producing license plates. For example, the indicia, in particular those representing the number of the license plate, may be printed e.g. by thermal transfer printing or by inkjet printing or the indicia may be cut out of a colored adhesive film and glued on the plate. The indicia may be printed on or glued on the front face of the license plate or they can be buried in the license plate. In addition to printed indicia, the indicia can be raised. By raised indicia is meant that the indicia project from the front face of the license plate. Typically the indicia can be raised by 0.3 to 20 mm relative to the background of the license plate, preferably 0.5 to 15mm. Raised indicia may be obtained by deep drawing but are preferably made by embossing a laminate of the transparent polymeric support sheet and a sheet of the semi-transparent retroreflective material. Preferably the raised surface of the indicia will be colored to render the indicia opaque or at least less transparent than the background of the license plate. Typically the raised surface may be colored by hot foil stamping or by roll coating with inks.

The license plate can be made by equipment and techniques that are typically used to produce conventional front lit license plates. Thus, according to one embodiment, the license plate may be obtained by adhering a transparent polymeric support sheet and a semi-transparent retroreflective sheet together followed by dimensioning and shaping the obtained laminated as desired. Alternatively however, the respective sheets forming the laminate may be dimensioned and shaped before being adhered together. Also, the license plate may be shaped and dimensioned so as to adapt it for being removably mounted to a light source. For example, a rim may be provided along one or more sides of the license plate. Such a rim may then be used to clamp the license plate against the light source. Alternative, such a rim may locate with one or more corresponding channels on the light source such the license plate may slide into these channels. Still further, portions of the license plate may be projecting beyond the required dimension of the license plate along one or more sides of the license plate and these may then be used to clamp the plate to the light source.

The laminate may then be embossed to provide raised indicia. Such embossing is preferably carried out at ambient temperature by pressing a metallic or thermoset polymeric template having a representation of the indicia on the license plate. Following this operation, the raised surfaces of the indicia may be colored by hot stamping a colored wax ribbon thereon. Accordingly, this method allows for making back-lit license plate using the equipment that is typically used to make embossed metallic license plates. Alternatively, the raised indicia may be thermoformed by subjecting the laminate to heat while pressing a template representing the indicia on the laminate.

Back-lit license plates where the indicia are printed by e.g. a thermal transfer printer or inkjet printer can equally be produced with existing manufacturing equipment. For example, such printed license plates are used in the UK. Thus, to produce back-lit license plates that have printed indicia, a laminate of the polymeric support sheet and a sheet of the semi-transparent retroreflective material may be printed on the front face with the indicia.

Alternatively, the indicia may be first printed on the semi-transparent retroreflective sheet before it is laminated with the support sheet. Still further, the support sheet, if it defines the front face of the license plate, may be reverse printed before being laminated with the semi-transparent retroreflective sheet. Yet further, an additional transparent film may be included in the laminate which may be provided with the printed indicia. Thus, the same laminate can be used for a variety of existing license plate manufacturing methods.

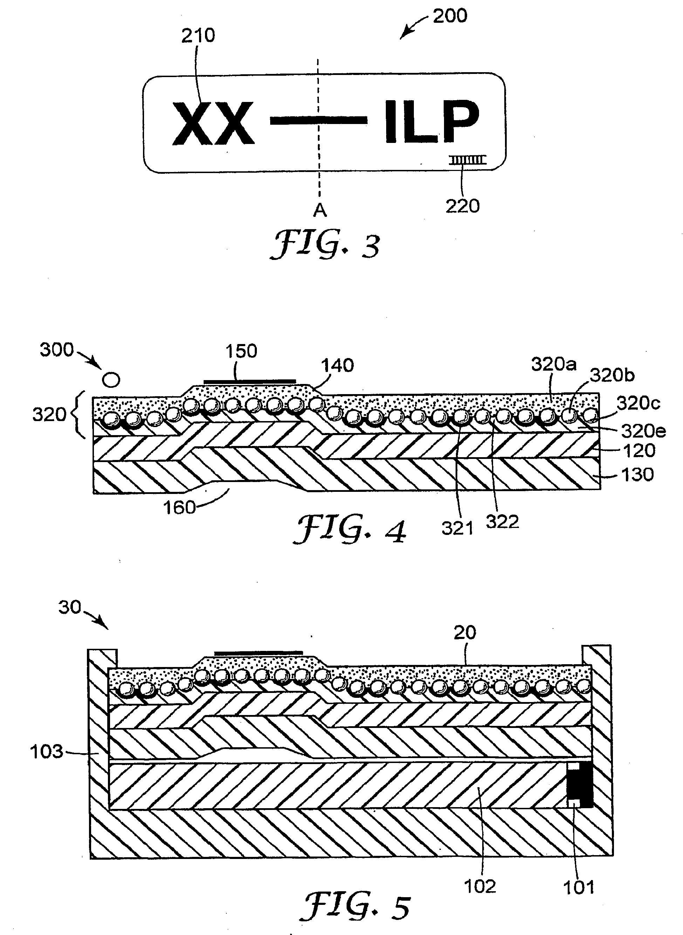

Figure 3 shows a license plate 200 comprising indicia 210 that define the number of the license plate as issued by an authority. License plate 200 further shows barcode 220 which may present additional information regarding the license plate such as source of its manufacturing.

Figure 4 show a cross-section along line A in figure 3 illustrating a particular embodiment of the license plate in connection with this invention.License plate 300 illustrated in figure 4 uses semi-transparent retroreflective sheeting 320 adhered by transparent adhesive layer 120 to transparent polymeric support sheet 130. Retroreflective sheeting 320 comprises glass or ceramic microspheres 320b that are partially embedded in a binder matrix comprising a bottom layer 320e and a topcoat 320a. Functionally behind the microspheres 320b is a reflective layer 320c. Reflective layer 320c comprises a pattern of metal areas 321 and open areas 322. Between the microspheres and the reflective layer 320c there may be provided a space coat (not shown) as described above. Retroreflective sheet 320 is arranged such that the microspheres will be on the display side of the license plate. The indicia 140 of the license plate are raised and are rendered opaque by a hot stamp foil 150. On the rear side a recess 160 corresponding to the raised indicia is present as result of embossing the laminate to obtain the raised indicia.

### License plate assembly

The license plate preferably can be removably mounted to a variety of light sources that may be used to provide back lighting. By "removably mounted" is meant that the license plate can be mounted on the light source, removed there from and preferably mounted again to the light source. Generally, the mounting of the license plate to the light source is simple and easy and can be practiced by a user or owner of a car. For example, the license plate may be mounted to the light source using screws in much the same way as mounting of conventional license plates. Alternatively, the license plate may be clamped on the light source by means provided on the light source or the license plate may be mounted to the light source through the aid of a frame.

As mentioned above, the license plate can be used with a variety of light sources that have been used or disclosed for back lighting license plates. For example, the light source may comprise an electrically activatable layer or film that upon electrical activation emits light. Examples thereof include electroluminescent films such as for example those disclosed in WO 98/20375, which describes retroreflective signs such as billboards that are illuminated with an electroluminescent film. Generally, an electroluminescent layer or film will comprise a polymeric binder in which an electroluminescent material is dispersed. Such electroluminescent material may be selected according to a desired color to be emitted and a mixture of different electroluminescent material can be used. The electroluminescent material is typically an inorganic substance. However, organic electroluminescent materials are known as well and can be used also. Organic electroluminescent materials are known in the art as Organic Light Emitting Diodes (OLED). OLED's typically comprise on a substrate, one or more organic layers between two electrodes. The organic layers can be electrically activated with the electrodes as a result of which they start emitting light. The physical principle on which light is produced by the organic layers is known as "injection electroluminescence". Thus, an organic light emitting diode (OLED) typically comprises an organic light emitting layer disposed between two electrodes, whereby the organic light emitting layer luminesces when electricity flows between the electrodes. OLED are described in for example US 6,608,333 and US 6,501,218. The light source for use in the license plate assembly may also comprise conventional Light Emitting Diodes (LED).

Furthermore, according to a particular embodiment, the light source may comprise (i) a light guide having a front face to which the license plate can be removably mounted, a back face opposite thereto and one or more side faces and (ii) a light source for illuminating the light guide arranged along at least portion of at least one of the side faces, the other side faces generally being closed so as to not to allow light to escape there through. The light source that is used in the edge lighting of the light guide is typically an elongate light source. An elongate light source emits light substantially along its longitudinal direction and comprises an elongated luminant, like a light tube, e.g. a fluorescent tube, or several individual luminants spaced from each other and arranged adjacent to each other along the longitudinal direction of the light source. Accordingly, an elongate light source can comprise a linear array of separate light emitting elements.

Within the light guide, light is transmitted by total internal reflection at the front and back and side faces until the light rays impinge onto the front face and onto the light-transmissive retro-reflective film at an angle at which the light is transmitted out of the front face of the light guide. The light guide may be a hollow or a solid light guide.

The amount of light extracted out of the front face of a light guide can be enhanced by light-scattering particles added to the transparent material of the light guide. Moreover, a back reflector can be arranged at the back face of the light guide. Reflectors can also be arranged at the side faces of the light guide. Both the back reflector and the side face reflectors preferably are diffuse reflective, specular reflective, or scattering reflective films with high reflection efficiency. Arranging reflectors and, in particular, highly diffuser or specular or scattering reflective films along the back and side faces of the light guide provides for a light guide in which light can escape exclusively through the front face so that most of the light of the light source can be used for illuminating the license plate. Accordingly, such a design is highly efficient with regard to the required brightness, even illumination, and power consumption.

Moreover, other light extraction mechanisms, films or paints (in addition to, or as an alternative to, the reflectors mentioned before) can be used with the light guide. Also light-extraction elements printed onto a surface of the light guide (e.g. dots of variable size, shape and density) can be employed. Such arrangements are described, for example, in US-A-5,736,686; 5,649,754; 5,600,462; 5,377,084; 5,363,294; 5,289,351; 5,262,928; 5,667,289; and 3,241,256. Other light extraction arrangements that can be practiced are described in US-A-5,618,096, WO-A-92/05535, and WO-A-01/71248.

The use of a light device in combination with a light guide as described in the aforementioned embodiment is particular useful in minimizing the power requirements of the light device for a given desired light output on the display side of the license plate. Without intending to be bound by any theory, it is believed that light extracted from the light guide at areas where the retroreflective sheet of the license plate is opaque, may bounce back and forth between the light guide and the metal areas of the reflective layer until the light can escape to an open area in the reflective layer. Hence, the emitted light can be more effectively used. Indeed, it has been noticed that with a light device having a light guide, the light extracted at the front of the license plate is larger than would be predicted on the basis of the percentage transparent areas of the semi-transparent retroreflective material.

The light source of the license plate may be provided as a device that can be removably mounted to the body of the motor vehicle or trailer or may be provided as an integral part of the motor vehicle body or trailer.

Figure 5 illustrates a license plate assembly according to the invention. License plate assembly 100 comprises a light source that consists of a light guide 102 and an elongated light source 101 lighting the light guide from one of its side faces. On the front face of the light guide is arranged license plate 300. License plate 300 is removably mounted to the light source by clamping it in frame 103 of the license plate assembly 100.

The following examples further illustrate the invention.

### EXAMPLES

### Measurement of Retroreflectivity

The coefficient of retroreflection, R', of sheetings was measured according Deutsche Industrie Norm / DIN 67520 Part 1 using a photocell and a goniometer as described. The observation angle (α) was 0.33 °. Two entrance angles (β) were evaluated: 5° and 30°, respectively.

### Measurement of Transmission

The light transmission characteristics of sheeting were measured according to Deutsche Industrie Norm (DIN) 5063 Part 3, Section 5.6 entitled "Measurement of Transmittance under Diffuse Illumination, τ _{dif}".

### Example

A sheet comprising a layer of glass microspheres was prepared by the method generally described in US 2,407,680 (Palmquist) and shown in Figure 1 of US 2,407,680. First, a layer of transparent polymer having a thickness of 50 µm was cast onto a polymeric film support. A layer of glass microspheres having a refractive index of 2.26 and a mean diameter of 71 µm were then added so that the microspheres were partially embedded in the first layer of transparent polymer. A second layer of transparent polymer having a thickness of ca. 22 µm was then cast over the embedded microspheres to form a spacer layer.

A regularly perforated window marking film, commercially available as Scotchcal™ Film # 8173 from 3M Company, St. Paul, MN/USA, comprising a flexible polymeric film bearing a layer of removable pressure-sensitive adhesive (PSA) on one side, was adhered to the sheeting described above to form a mask. The adhesive layer of the mask was placed in contact with the side of the sheeting bearing the spacer layer. The sheeting bearing the adhered mask was then subjected to aluminum vapor coating.

The deposited aluminum was in a pattern of regularly arranged spots having a diameter of 1.5 mm. Each of the rows of aluminum spots thus deposited on the sheeting was staggered in relationship to the next as shown in the geometric arrangement depicted in Figure 1. The PSA-coated mask employed during the vapor coating process was then removed from the sheeting.

The coefficient of retroreflection, R', of the retroreflective sheeting prepared by the method above was measured to be 34.1 cd / (m² lx) at an entrance angle β of 5° and 17.1 cd / (m² lx) at an entrance angle β of 30° by the method described above under TEST METHODS.

The light transmission of the retroreflective sheeting was measured according to the method described above under TEST METHODS. The absolute value of light transmitted was 620 cd/m², corresponding to a transmission (τ_{dif}) of 57 %.

The appearance of the sheet under ambient light conditions was regular and uniform. Distinct areas of reflectivity and light transmission were not readily discernable to the naked eye when viewed from a distance of ca. 2 meters under ambient daylight conditions. Test results are summarized in Table 1.

A 40 µm thick layer of acrylic pressure-sensitive adhesive (PSA) was applied to the vapor-coated side of the sheet thus prepared, using an acrylic transfer tape supported on a removable liner. The film support originally used as a base for preparation of the microsphere-based sheeting was then removed. The adhesive-coated retroreflective sheet was then adhered (via the adhesive layer) to a transparent polycarbonate sheet having a thickness of 1 mm, resulting in a self-supporting substantially rigid license plate blank.

The license plate was then embossed using an embossing process performed at ambient temperatures to produced raised areas in the form of alpha-numerics. The embossing was performed so that the raised areas appeared on the side of the plate opposite the polycarbonate sheet. The top surfaces of the embossed areas were then blackened using hot-stamping film to provide black, raised indicia.

The license plate thus prepared was fitted to the front of the flat surface of a light guide. The license plate was oriented such that the transparent polycarbonate sheet was facing away from the observer and towards the light guide. The opposite surface of the license plate bearing the glass microspheres was directed towards the observer. The light guide was then illuminated from the side with light-emitting diodes (LEDs). When the LEDs were illuminated, light passed through the light guide and was directed through the back of the license plate towards the observer. In areas where there was no aluminum deposited, light passed through the license plate, rendering the plate visible to an observer under low ambient light conditions corresponding to dusk or darkness. In areas where there was a layer of aluminium, the sheeting was retroreflective.

Thus the illuminated license plate of the Example exhibited the desired combination of moderate retroreflectivity specified for vehicle license plates (for night visibility under retroreflective viewing conditions) as well as transparency (required for rear illumination to provide night visibility under other dark viewing conditions).

### Comparative Example

A license plate was prepared by the method of the Example above with the exception that the mask was not employed during the vapor-coating process. The resulting retroreflective sheet had a continuous aluminum vapor coat layer.

The license plate prepared using the retroreflective sheet thus prepared was more retroreflective than the license plate of the Example above. It exhibited a measured retroreflectivity of 76.2 cd/ (m² lx) at an entrance angle β of 5° and 41.7 cd/ (m² lx) at an entrance angle β of 30°. Due to presence of the opaque aluminum layer behind the glass microspheres over the entire area of the retroreflective sheet, the license plate of the Comparative Example was not light transmissive and not suitable for a rear illumination.

**Table 1**

| | Coefficient of Retroreflection, R', cd / (m² lx) | | Transmission, τ_{dif} (%) |
|---|---|---|---|
| | Observ. Angle α 0.33° | Observ. Angle α 0.33° | |
| | Entrance Angle β 5° | Entrance Angle β 30° | |
| Example | 34.1 | 17.7 | 57 |
| Comparative Example | 76.2 | 41.7 | 0 |

## Claims

1. Semi-transparent retroreflective material having a retroreflective side (16) and an opposite rear side (17), the retroreflective material having a regular or irregular two dimensional pattern of transparent and opaque areas, said retroreflective material comprising a layer of transparent microspheres (20) embedded in a binder matrix that comprises a top layer (21) defining the surface on the retroreflective side (16), a bottom layer defining the rear side (17), and a reflective layer located functionally behind said layer of transparent microspheres, said reflective layer comprising a regular or irregular two dimensional pattern of metal areas (11) of contiguous metal and open areas (12) having substantially no metal, wherein open areas (12) of said reflective layer correspond to transparent areas of said retroreflective material and metal areas (11) of said reflective layer correspond to opaque areas of said retroreflective material and wherein said transparent microspheres (20) are present in said transparent and opaque areas and wherein said transparent areas comprise at least 5% of the total surface of said retroreflective material on said retroreflective side (16).

2. Semi-transparent retroreflective material according to claim 1 the transparent areas comprise between 15 and 70 % of the total surface of the retroreflective material on said retroreflective side.

3. Semi-transparent retroreflective material according to any of the previous claims wherein at least part of the open areas and/or metal areas have a similar size and shape.

4. Semi-transparent retroreflective material according to any of the previous claims wherein the transparent microspheres are glass spheres.

5. Semi-transparent retroreflective material according to any of the previous claims further comprising a dielectric mirror located between said layer of transparent microspheres and said reflective layer or provided on said reflective layer.

6. License plate having a display side and opposite back side, the display side displaying indicia (210) defining a license plate number, said license plate being adapted to be illuminated from the back side, wherein said license plate comprises a semi-transparent retroreflective material (320) as defined in any of claims 1 to 5 and wherein the semi-transparent retroreflective material (320) is arranged in such a way so as to render the display side of said license plate retroreflective.

7. License plate according to claim 6 further comprising a transparent polymeric support.

8. License plate according to claim 7 wherein said semi-transparent retroreflective material is adhered to said transparent polymeric support through a transparent adhesive layer and wherein the transparent polymeric support is on the back side of the license plate.

9. License plate according to any of claims 6 to 8 wherein said indicia comprise raised structures, said indicia being opaque or having a reduced transparency relative to background areas of the license plate.

10. License plate according to any of claims 6 to 8 wherein said indicia comprise printed indicia exposed on the surface of the side displaying said license plate number or buried in said license plate on the side displaying said license plate number.

11. License plate assembly comprising a light source (101,102) and a license plate (300) as defined in any of claims 6 to 8 arranged on said light source such that said license plate can be illuminated by said light source from the back side of the license plate.

12. License plate assembly according to claim 11 wherein said assembly further comprises a light guide having a front face to which said license plate can be mounted, a back face opposite thereto and one or more side faces and wherein one or more light sources for illuminating said light guide are arranged along at least portion of at least one of said side faces.

13. License plate assembly according to claim 12 wherein said light source comprises one or more LED devices.

14. Motor vehicle or trailer comprising a license plate assembly as defined in any of claims 11 to 13.

15. Method for making a license plate as defined in any of claims 6 to 10, said method comprising (i) providing a semi-transparent retroreflective material as defined in any of claims 1 to 5, (ii) cutting said semi-transparent retroreflective material to required dimensions and applying indicia defining a license plate number.

16. Method according to claim 15 further comprising the step of laminating the semi-transparent retroreflective material to a transparent polymeric support and embossing the so obtained laminate to apply said indicia.

## Patentansprüche

1. Semitransparentes retroreflektierendes Material mit einer retroreflektierenden Seite (16) und einer gegenüberliegenden Rückseite (17), wobei das retroreflektierende Material ein regelmäßiges oder unregelmäßiges zweidimensionales Muster aus transparenten und lichtundurchlässigen Bereichen aufweist, wobei das retroreflektierende Material eine Schicht transparenter Mikrokügelchen (20) umfasst, die in eine Bindemittelmatrix eingebettet sind, die eine Deckschicht (21) umfasst, welche die Oberfläche auf der retroreflektierenden Seite (16) definiert, eine Grundschicht, welche die Rückseite (17) definiert, und eine reflektierende Schicht, die funktionell hinter der Schicht transparenter Mikrokügelchen angeordnet ist, wobei die reflektierende Schicht ein regelmäßiges oder ein unregelmäßiges zweidimensionales Muster aus Metallbereichen (11) aus durchgehendem Metall und offenen Bereichen (12), die im Wesentlichen kein Metall aufweisen, umfasst, wobei offene Bereiche (12) der reflektierenden Schicht transparenten Bereichen des retroreflektierenden Materials entsprechen und Metallbereiche (11) der reflektierenden Schicht lichtundurchlässigen Bereichen des retroreflektierenden Materials entsprechen und wobei die transparenten Mikrokügelchen (20) in den transparenten und lichtundurchlässigen Bereichen vorhanden sind und wobei die transparenten Bereiche mindestens 5 % der Gesamtfläche des retroreflektierenden Materials auf der retroreflektierenden Seite (16) ausmachen.

2. Semitransparentes retroreflektierendes Material nach Anspruch 1, wobei die transparenten Bereiche zwischen 15 und 70 % der Gesamtfläche des retroreflektierenden Materials auf der retroreflektierenden Seite ausmachen.

3. Semitransparentes retroreflektierendes Material nach einem der vorhergehenden Ansprüche, wobei mindestens ein Teil der offenen Bereiche und/oder Metallbereiche die gleiche Größe und Form aufweisen.

4. Semitransparentes retroreflektierendes Material nach einem der vorhergehenden Ansprüche, wobei die transparenten Mikrokügelchen Glaskügelchen sind.

5. Semitransparentes retroreflektierendes Material nach einem der vorhergehenden Ansprüche, ferner einen dielektrischen Spiegel umfassend, der zwischen der Schicht transparenter Mikrokügelchen und der reflektierenden Schicht angeordnet oder auf der reflektierenden Schicht bereitgestellt ist.

6. Nummernschild mit einer Anzeigeseite und einer gegenüberliegenden Rückseite, wobei die Anzeigeseite Zeichen (210) zeigt, die ein Kennzeichen definieren, wobei das Nummernschild dafür eingerichtet ist, von der Rückseite aus beleuchtet zu werden, wobei das Nummernschild ein semitransparentes retroreflektierendes Material (320) nach einem der Ansprüche 1 bis 5 umfasst und wobei das semitransparente retroreflektierende Material (320) derart angeordnet ist, dass die Anzeigeseite des Nummernschildes retroreflektierend wird.

7. Nummernschild nach Anspruch 6, ferner einen transparenten polymeren Träger umfassend.

8. Nummernschild nach Anspruch 7, wobei das semitransparente retroreflektierende Material durch eine transparente Klebstoffschicht an den transparenten polymeren Träger geheftet ist und wobei sich der transparente polymere Träger auf der Rückseite des Nummernschildes befindet.

9. Nummernschild nach einem der Ansprüche 6 bis 8, wobei die Zeichen erhöhte Strukturen umfassen, die Zeichen lichtundurchlässig sind oder im Verhältnis zu Untergrundbereichen des Nummernschildes eine verringerte Transparenz aufweisen.

10. Nummernschild nach einem der Ansprüche 6 bis 8, wobei die Zeichen Druckzeichen umfassen, die auf der Oberfläche der Seite, die das Kennzeichen anzeigt, aufgebracht sind, oder die auf der Seite, die das Kennzeichen anzeigt, eingelassen sind.

11. Nummernschildanordnung, eine Lichtquelle (101, 102) und ein Nummernschild (300) nach einem der Ansprüche 6 bis 8 umfassend, das derart auf der Lichtquelle angeordnet ist, dass das Nummernschild durch die Lichtquelle von der Rückseite des Nummernschildes aus beleuchtet werden kann.

12. Nummernschildanordnung nach Anspruch 11, wobei die Anordnung ferner einen Lichtleiter, der eine Vorderseite aufweist, an die das Nummernschild montiert werden kann, eine gegenüberliegende Rückseite und eine oder mehrere Seitenflächen umfasst und wobei eine oder mehrere Lichtquellen zur Beleuchtung des Lichtleiters an mindestens einem Abschnitt mindestens einer der Seitenflächen angeordnet sind.

13. Nummernschildanordnung nach Anspruch 12, wobei die Lichtquelle eine oder mehrere LED-Einheiten umfasst.

14. Kraftfahrzeug oder Anhänger, eine Nummernschildanordnung nach einem der Ansprüche 11 bis 13 umfassend.

15. Verfahren zur Herstellung eines Nummernschildes nach einem der Ansprüche 6 bis 10, wobei das Verfahren Folgendes umfasst: (I) Bereitstellen eines semitransparenten retroreflektierenden Materials nach einem der Ansprüche 1 bis 5, (II) Schneiden des semitransparenten retroreflektierenden Materials auf erforderliche Abmessungen und Aufbringen von Zeichen, die ein Kennzeichen definieren.

16. Verfahren nach Anspruch 15, ferner den Schritt des Laminierens des semitransparenten retroreflektierenden Materials an einen transparenten polymeren Träger und des Prägens des so gewonnenen Laminats umfassend, um die Zeichen aufzubringen.

## Revendications

1. Matériau semi-transparent rétroréfléchissant ayant un côté rétroréfléchissant (16) et un côté arrière opposé (17), le matériau rétroréfléchissant ayant un motif bidimensionnel régulier ou irrégulier de zones transparentes et opaques, ledit matériau rétroréfléchissant comprenant une couche de microsphères transparentes (5) incorporées dans une matrice de liant qui comprend une couche supérieure (21) définissant la surface sur le côté rétroréfléchissant (16), une couche inférieure définissant le côté arrière (17), et une couche réfléchissante située fonctionnellement derrière ladite couche de microsphères transparentes, ladite couche réfléchissante comprenant un motif bidimensionnel régulier ou irrégulier de zones métalliques (11) de métal contigu et de zones ouvertes (12) ne comportant sensiblement pas de métal, dans lequel les zones ouvertes (12) de ladite couche réfléchissante correspondent aux zones transparentes dudit matériau rétroréfléchissant et les zones métalliques (11) de ladite couche réfléchissante correspondent aux zones opaques dudit matériau rétroréfléchissant, dans lequel lesdites microsphères transparentes (20) sont présentes dans lesdites zones transparentes et opaques, et dans lequel lesdites zones transparentes représentent au moins 5 % de la surface totale dudit matériau rétroréfléchissant sur ledit côté rétroréfléchissant (16).

2. Matériau semi-transparent rétroréfléchissant selon la revendication 1 dans lequel les zones transparentes représentent entre 15 et 70 % de la surface totale du matériau rétroréfléchissant sur ledit côté rétroréfléchissant.

3. Matériau semi-transparent rétroréfléchissant selon l'une quelconque des revendications précédentes dans lequel au moins une partie des zones ouvertes et/ou des zones métalliques a une taille et une forme similaires.

4. Matériau semi-transparent rétroréfléchissant selon l'une quelconque des revendications précédentes dans lequel les microsphères transparentes sont des sphères de verre.

5. Matériau semi-transparent rétroréfléchissant selon l'une quelconque des revendications précédentes comprenant en outre un miroir diélectrique situé entre ladite couche de microsphères transparentes et ladite couche réfléchissante ou disposé sur ladite couche réfléchissante.

6. Plaque d'immatriculation comportant un côté d'affichage et un côté arrière opposé, le côté d'affichage affichant des indices (210) définissant un numéro de plaque d'immatriculation, ladite plaque d'immatriculation étant adaptée pour être éclairée depuis le côté arrière, ladite plaque d'immatriculation comprenant un matériau semi-transparent rétroréfléchissant (320) tel que défini dans l'une quelconque des revendications 1 à 5, et le matériau semi-transparent rétroréfléchissant (320) étant disposé de manière à rendre le côté d'affichage de ladite plaque d'immatriculation rétroréfléchissant.

7. Plaque d'immatriculation selon la revendication 6 comprenant en outre un support polymère transparent.

8. Plaque d'immatriculation selon la revendication 7 dans laquelle ledit matériau semi-transparent rétroréfléchissant est collé audit support polymère transparent par une couche adhésive transparente et dans laquelle le support polymère transparent se situe sur le côté arrière de la plaque d'immatriculation.

9. Plaque d'immatriculation selon l'une quelconque des revendications 6 à 8 dans laquelle lesdits indices comprennent des structures en relief, lesdits indices étant opaques ou ayant une transparence réduite par rapport aux zones de fond de la plaque d'immatriculation.

10. Plaque d'immatriculation selon l'une quelconque des revendications 6 à 8 dans laquelle lesdits indices comprennent des indices imprimés exposés sur la surface du côté affichant ledit numéro de plaque d'immatriculation ou noyés dans ladite plaque d'immatriculation sur le côté affichant ledit numéro de plaque d'immatriculation.

11. Ensemble plaque d'immatriculation comprenant une source de lumière (101, 102) et une plaque d'immatriculation (300) telle que définie dans l'une quelconque des revendications 6 à 8 disposée sur ladite source de lumière de telle sorte que ladite plaque d'immatriculation peut être éclairée par ladite source de lumière depuis le côté arrière de la plaque immatriculation.

12. Ensemble plaque d'immatriculation selon la revendication 11, ledit ensemble comprenant en outre un guide de lumière ayant une face avant sur laquelle ladite plaque d'immatriculation peut être montée, une face arrière à l'opposé de celle-ci et une ou plusieurs faces latérales, dans lequel une ou plusieurs sources de lumière pour éclairer ledit guide de lumière sont disposées le long d'au moins une partie de l'une au moins desdites faces latérales.

13. Ensemble plaque d'immatriculation selon la revendication 12 dans lequel ladite source de lumière comprend un ou plusieurs dispositifs à DEL.

14. Véhicule à moteur ou remorque comprenant un ensemble plaque d'immatriculation tel que défini dans l'une quelconque des revendications 11 à 13.

15. Procédé de fabrication d'une plaque d'immatriculation telle que définie dans l'une quelconque des revendications 6 à 10, ledit procédé comprenant (i) l'obtention d'un matériau semi-transparent rétroréfléchissant tel que défini dans l'une quelconque des revendications 1 à 5, (ii) la découpe dudit matériau semi-transparent rétroréfléchissant aux dimensions requises et l'application d'indices définissant un numéro de plaque d'immatriculation.

16. Procédé selon la revendication 15 comprenant en outre l'étape de laminage du matériau semi-transparent rétroréfléchissant sur un support polymère transparent et le gaufrage du stratifié ainsi obtenu pour appliquer lesdits indices.
